# EUROPÄISCHE PATENTSCHRIFT

(11) **EP 4 126 403 B1**
(45) Veröffentlichungstag und Bekanntmachung des Hinweises auf die Patenterteilung: **30.04.2025**
(21) Anmeldenummer: 21718807.7
(22) Anmeldetag: 26.03.2021
(51) Int. Cl.: B08B 9/04, B60L 7/28

(54) **INSPEKTIONSVORRICHTUNG ZUR INSPEKTION VON SICH FLÄCHIG ERSTRECKENDEN METALLISCHEN GEGENSTÄNDEN**
INSPECTION DEVICE FOR METAL OBJECTS EXTENDING OVER A WIDE AREA
DISPOSITIF D'INSPECTION D'OBJETS MÉTALLIQUES S'ÉTENDANT À PLAT

(30) Priorität: 31.03.2020 DE 102020108963
(43) Veröffentlichungstag der Anmeldung: 08.02.2023
(73) Patentinhaber: Rosen IP AG, 6370 Stans (CH)
(72) Erfinder: SCHULTE, Michael, 49716 Meppen (DE)
(74) Vertreter: Wischmeyer, André
(86) Internationale Anmeldenummer: PCT/EP2021/057997
(87) Internationale Veröffentlichungsnummer: WO 2021/198097

(56) Entgegenhaltungen:
- WO-A1-2021/116433
- DE-A1- 102004 053 584
- DE-A1- 102013 011 626
- US-B1- 6 523 650

## Beschreibung

Die vorliegende Erfindung betrifft eine Inspektionsvorrichtung zur Inspektion von sich flächig erstreckenden, metallischen Gegenständen, insbesondere Blechen oder Wänden, wobei die Inspektionsvorrichtung durch Verzicht auf zumindest ein einen inneren Rohrleitungsquerschnitt zumindest im Wesentlichen ausfüllendes Vortriebselement rohrleitungsungängig ausgebildet ist, umfassend zumindest eine Funktionseinheit zum Aufnehmen von Gegenstandsinformationen sowie umfassend zumindest eine zur Magnetisierung des Gegenstands vorgesehene Magneteinheit mit einer Mehrzahl von Magneten.

Eine solche Inspektionsvorrichtung zur zerstörungsfreien Prüfung ist beispielsweise als Hand-Inspektionsgerät mit zumindest einem Handgriff oder als ortsfest zu installierendes Gerät mit einem ortsfest anzuordnenden Gestell ausgebildet. Es kann sich alternativ oder ergänzend um eine mittels eines Handgriffs oder einer anderen Führungs- oder Antriebsvorrichtung außen an einer Rohrleitung, einer Metallwand oder einem Metallblech entlang zu führende oder sich selbstständig mittels zumindest eines Antriebselements aktiv außen an dieser/diesem entlang bewegende Inspektionsvorrichtung handeln. "Rohrleitungsungängig" bedeutet für den Zweck der vorliegenden Anmeldung, dass die Inspektionsvorrichtung keinen durch eine Rohrleitung passiv oder aktiv hindurch bewegten Molch ausbildet. Eine passive Bewegung eines Molches durch eine Rohrleitung wird insbesondere durch ein einen inneren, freien Rohrleitungsquerschnitt zumindest im Wesentlichen ausfüllendes Vortriebselement erzeugt, gegen den ein in der Rohrleitung bewegtes Fluid drücken kann.

Inspektionsvorrichtungen nach dem Oberbegriff des Anspruchs 1 weisen eine Magneteinheit auf, um den zu prüfenden metallischen Gegenstand mittels der Magneteinheit zu magnetisieren. Aufgrund des im Gegenstand erzeugten Magnetfelds ergeben sich ergeben sich je nach Art der zerstörungsfreien Prüfung Signale, die von der Funktionseinheit aufgenommen bzw. verarbeitet werden können. Die für die Magnetisierung des Gegenstands erforderlichen Magnetfelder können durch Elektro- und/oder Permanentmagnete erzeugt werden. Nachteilig ist, dass diese bei hohen Feldstärken vergleichsweise viel Energie benötigen bzw. groß bauen und entsprechend schwer sind.

Aus der nachveröffentlichten WO 2021/116433 ist ein Inspektionsmolch bekannt, der eine Funktionseinheit zum Aufnehmen von Rohrleitungsinformationen sowie zumindest eine zur Magnetisierung der Rohrleitungswand vorgesehene Magneteinheit mit einer Mehrzahl von Magneten aufweist.

Aus der DE 10 2013 011 626 A1 ist ebenfalls ein Inspektionsmolch bekannt, der eine durch Magnete ausgebildete Wirbelstrombremseinheit umfasst.

Die DE 10 2007 053 584 A1 offenbart eine Vorrichtung und ein Verfahren zur Materialprüfung und/oder Dickenmessung an einem wenigstens elektrisch leitenden und ferromagnetische Materialanteile aufweisenden Prüfobjekt.

Die US 6,523,650 B1 offenbart eine Wirbelstrombremseinheit, wobei die aneinander angrenzenden Magnete um 90° angewinkelt sind.

Es ist Aufgabe der vorliegenden Erfindung, eine Inspektionsvorrichtung zu schaffen, die die genannten Nachteile nicht aufweist.

Die Aufgabe wird gelöst durch einen Gegenstand gemäß Anspruch 1, vorteilhafte Ausgestaltungen der Erfindung sind den Unteransprüchen sowie der Beschreibung zu entnehmen.

Die Aufgabe wird gelöst durch eine Inspektionsvorrichtung nach dem Oberbegriff des Anspruchs 1, bei dem die Magneteinheit mehrere Segmente mit jeweils zumindest einem Magnet aufweist und die Magnetisierungsrichtung aneinander angrenzender Segmente zumindest in etwa um 90°, vorzugsweise um genau 90°, gegeneinander angewinkelt bzw. gekippt sind. Durch die Ausbildung einer solchen Magneteinheit lassen sich die magnetischen Flussdichten erhöhen und es ergibt sich eine Reihe von Anordnungsmöglichkeiten, bei denen die Flussdichten in dem Gegenstand erhöht sind. Das auf den Gegenstand einwirkende und in diesem erzeugt Magnetfeld ist stärker als bei üblicherweise verwendeten Magneten, so dass die gesamte Magneteinheit kürzer und kleiner und damit die Inspektionsvorrichtung leichter bauen kann.

Die Magneteinheit kann auch Teil der Funktionseinheit sein, bzw. ein oder mehrere Teile der Funktionseinheit können in der Magneteinheit angeordnet oder Teil dieser sein. Die Funktionseinheit weist weiterhin je nach verwendeter Technik insbesondere eine oder mehrere für die Erzeugung von Anregungssignalen und/oder für die Aufnahme von Gegenstandsinformationen in Form von Messsignalen notwendige Einheiten, z.B. einen oder mehrere Sensoren (z.B. Sende- und/oder Empfangswandler), Ansteuer- und/oder Auswerteelektronik, Energiespeicher, Übertragungs- und/oder Schnittstellenmittel, etc. auf.

Vorzugsweise umfasst ein Segment der Magneteinheit einen einzigen Magneten, es kann allerdings auch mehrere, hinsichtlich ihrer Magnetisierungsrichtung insbesondere gleich gerichtete Magnete aufweisen.

Aneinander angrenzende Magnete sind Magnete, die durch eine Magnetfassung getrennt oder sich direkt sich berührend aneinander liegen.

Vorzugsweise handelt es sich bei den Magneten der Segmente bzw. der Magneteinheit um Permanentmagnete, insbesondere Neodym-Magnete. Insbesondere weisen die zueinander hingerichteten Pole zweier Segmente, die durch ein weiteres Segment getrennt sind, identische Polarität auf, d.h. sie bilden beide entweder zueinander hingerichtete Nord- oder Südpole aus, wobei zwischen den Magneten bzw. Segmenten ein Magnet eines weiteren Segments angeordnet ist. Insbesondere weist dieses dazwischen angeordnete Segment mit seiner eigenen Nordpol- oder Südpolseite im Betriebsfall ebenfalls in Richtung der Oberfläche des Gegenstands. Hierdurch erfolgt bereits eine erste Fokussierung der Magnetfeldlinien im Betriebsfall hin zur Oberfläche, während auf der von der Oberfläche abgewandten Seite der Magneteinheit eine Abschwächung der Magnetfeldlinien vorliegt. Solcherart nach Art von Halbach-Arrays aufgebaute Magneteinheiten führen bereits zu höheren Flussdichten und höheren Magnetfeldstärken in dem Gegenstand, wodurch die Magneteinheiten und damit entsprechende Molchsegmente kürzer bauen können.

Nachfolgend werden die Segmente, deren Magneten mit einer Magnetisierungsrichtung (Richtung Nord-Süd) im Wesentlichen senkrecht zur Oberfläche des (im Betriebsfall) zu inspizierenden Gegenstands versehen sind, auch als Vertikal-Segmente bezeichnet. Die Magnetisierungsrichtung, die durch eine gedachte Linie vom Nord- zum Südpol gekennzeichnet ist, liegt in einem Winkelbereich von ± 15° um eine Senkrechte auf der Oberfläche des Gegenstands. Entsprechend ist die Magnetisierungsrichtung um 75° bis 105°, vorzugsweise um 90 ° zur Oberfläche des zu betrachtenden Gegenstands geneigt, wenn Inspektionsvorrichtung und Gegenstand im Betrieb sich relativ zueinander bewegen. Die Magnetisierungsrichtung eines Segments entspricht der Magnetisierungsrichtung des oder der das Segment ausbildenden Magnete.

Das Vertikal-Segment führt zur Einleitung von im Betriebsfall in Richtung der Oberfläche des Gegenstands in etwa oder direkt senkrecht gerichteten Magnetfeldlinien, was beispielsweise für eine EMAT-Wandstärkenmessung vorteilhaft ist. In etwa senkrecht bedeutet in diesem Fall wie auch vorstehend in einem Bereich von +/- 15° um eine Senkrechte.

Eine erfindungsgemäße Inspektionsvorrichtung ist weiterhin verbessert, wenn gemäß einer weiteren erfindungsgemäßen Ausbildung das Vertikal-Segment zur Oberfläche des (im Betriebsfall) zu inspizierenden Gegenstands hin von einem Fokussierelement begrenzt ist. Ein solches insbesondere zumindest im Wesentlichen aus Stahl ausgebildetes Fokussierelement dient der weiteren Bündelung und Verstärkung der Magnetfeldlinien. Das Fokussierelement ist insbesondere magnetisierbar.

Es hat sich überraschenderweise gezeigt, dass besser als bei Magnetanordnungen nach Art eines Halbach-Arrays ohne Fokussierelement(e), bei denen die maximale Einbringung des Magnetfeldes durch die Sättigungsflussdichte begrenzt ist, durch die zusätzliche Verwendung des Fokussierelements sehr hohe Flussdichten realisiert werden können. Die Effizienz, d.h. die im Betriebsfall in dem Gegenstand messbare Magnetfeldstärke erhöht sich um bis zu einen Faktor 3. Für die Erlangung bisheriger Flussdichten im Material des Gegenstands zu verwendende Einheiten können im Umkehrschluss somit deutlich kleiner bauen als bisher, was wiederum insbesondere die Tragbarkeit und/oder die Auslegung der Inspektionsvorrichtung verbessert.

Entsprechend ergibt sich bei einer Ausbildung eines erfindungsgemäßen Inspektionsgerätes, bei der das Fokussierelement auf zumindest drei Seiten von einem Magnet begrenzt ist, wobei die auf diesen Seiten befindlichen Pole der Magnete identische Polarität aufweisen, insbesondere jedoch gleichzeitig zu unterschiedlichen Segmenten gehören, im Betriebsfall eine drastische Erhöhung der Magnetfeldstärken und Flussdichten in dem zu inspizierenden Gegenstand. Eine solche erfindungsgemäße Vorrichtung baut deutlich kürzer als gleiche Kräfte erzeugende Vorrichtungen aus dem Stand der Technik.

Die in dem Fokussierelement, die insbesondere zumindest im Wesentlichen aus Stahl umfassend Kobalt und Eisen, aufgebaut sind, vorhandenen Flussdichten liegen insbesondere bei bis zu 2,5 T, zumindest jedoch bei bis zu 2,3 T. Beispielsweise ergibt sich bei einer mit neun hintereinander liegenden Magneten versehenen Magneteinheit, bei der einander nachfolgende Magnete zueinander gekippte Magnetisierungsrichtungen aufweisen und die zu einer Art Halbach-Array angeordnet sind, eine Anziehungskraft zum Gegenstand von bis zu 45 kN. Eine zusätzlich wie vorbeschrieben mit Fokussierelementen versehene, ansonsten jedoch in gleicher Abfolge und Magnetisierungsrichtung der gleich starken Magnete aufgebaute Magneteinheit führt zu Anziehungskräften von 180 kN.

Mit entsprechenden Magneteinheiten versehene Inspektionsvorrichtungen können somit bei gleichen Kräften deutlich kürzer bauen und sind leichter und damit z.B. besser tragbar.

Zwecks weiterer Fokussierung der Magnetfeldlinien in Richtung zur oder von der Oberfläche des zu inspizierenden Gegenstands können die Magneteinheiten gemäß einem weiteren erfindungsgemäßen Ausführungsbeispiel in eine Längsrichtung parallel zur Oberfläche des zu inspizierenden Gegenstands eine aus einem magnetisierbaren Material zumindest mit ausgebildete Einfassung aufweisen, die die Magneten der Magneteinheit begrenzt. In einer Ansicht in Richtung quer zur Längsrichtung sind beispielsweise in Bewegungsrichtung vorne und hinten entsprechende Einfassungen in der Magneteinheit vorhanden.

Alternativ oder ergänzend kann eine vorzugsweise länglich ausgebildete Magneteinheit einer erfindungsgemäßen Inspektionsvorrichtung auch quer zur Längsrichtung ausgerichtet sein, wobei dann ihre Außenseite beispielsweise einer Krümmung einer zu betrachtenden Außenoberfläche einer Rohrleitungswand angepasst ist. Auch mit ihrer Längserstreckung parallel zur Längsrichtung ausgebildete Magneteinheiten können mit einer Außenseite versehen sein, deren Krümmung hinsichtlich der Krümmung einer Außenoberfläche einer Rohrleitungswand oder eines gekrümmt hergestellten Blechs angepasst ist.

Die Einfassung wie auch das Fokussierelement sind insbesondere aus Kobalt-Eisen-Stahl, zumindest und insbesondere jedoch aus magnetisierbarem Stahl ausgebildet.

Gemäß einer erfindungsgemäßen Weiterbildung ist die Magneteinheit mit einem Sensor zur Aufnahme von Gegenstandsinformationen, d.h. Sensordaten bzw. Inspektionsdaten versehen. Der Sensor der Funktionseinheit ist somit ebenfalls der Magneteinheit zugeordnet. Dieser Sensor ist insbesondere in dem Fokussierelement, in einer Ausnehmung desselben und/oder an dem Fokussierelement angeordnet und somit zentral in oder an der Magneteinheit angeordnet. Nach dem Vorstehenden ergibt sich, dass die Magnetisierungsrichtungen der nicht als Vertikal-Segmente ausgebildeten Segmente vorzugsweise parallel oder angenähert parallel zu der Längsrichtung, die der bevorzugten Bewegungsrichtung während des Betriebs entspricht, verlaufen. Eine solche Ausbildung kann beispielsweise bei einer Auslegung der Funktionseinheit für eine EMAT- Prüfung und/oder Wandstärkensensor vorliegen.

Die Magneteinheit weist vorzugsweise in deren Längsrichtung zumindest drei hintereinander angeordnete Magnete auf, wobei gemäß einem weiteren Ausführungsbeispiel insbesondere sieben Magnete hintereinander angeordnet sind, so dass es vorzugsweise zwei von Nordpolen von Permanentmagneten begrenztes Fokussierelement und ein von Südpolen begrenztes Fokussierelement gibt. Weiterhin ist es insbesondere möglich, jeweilige Fokussierelemente nicht nur von drei sondern insbesondere auch von fünf Magneten seitlich begrenzen zu lassen.

Während Magneteinheiten zur Inspektion typischerweise quader-, blockförmig und/oder länglich ausgebildet sind, kann es gemäß einem weiteren erfindungsgemäßen Ausführungsbeispiel von Vorteil sein, ringförmige Magneteinheiten auszubilden, um in der Oberfläche des Gegenstands gezielt entsprechende Magnetfelder zu erzeugen.

Um Hafteffekte an der betrachteten Oberfläche des Gegenstands zu vermeiden weist ein erfindungsgemäßer Molch gemäß einem weiteren Ausführungsbeispiel wenigstens einen Abstandshalter auf, der vorzugsweise hinsichtlich eines Abstands der Magnete von der Wand bzw. Oberfläche einstellbar ausgebildet ist, und über den die Magneteinheit von der Oberfläche des zu inspizierenden Gegenstands beabstandet positionierbar ist. Zur Abdeckung einer gekrümmten Kontur des Gegenstands, z.B. einer Außenoberfläche einer Rohrleitung kann die Inspektionsvorrichtung betrachtet wieder in die im Betriebsfall auftretende Bewegungsrichtung mehrere Magneteinheiten nebeneinander aufweisen.

Weitere Vorteile und Einzelheiten der Erfindung sind der nachfolgenden Figurenbeschreibung zu entnehmen. Schematisch dargestellt zeigt:
- Fig. 1: einen Abstandshalter mit einer Magneteinheit einer erfindungsgemäßen Vorrichtung in einer perspektivischen Darstellung,
- Fig. 2: die Vorrichtung nach Fig. 1 in einer teilweise aufgeschnittenen Ansicht,
- Fig. 3: eine perspektivische Darstellung einer weiteren Magneteinheit mit Sensoren,
- Fig. 4: eine Prinzipdarstellung des Einsatzes einer erfindungsgemäßen Inspektionsvorrichtung,
- Fig. 5: eine vereinfachte Ansicht einer Magneteinheit einer weiteren erfindungsgemäßen Vorrichtung in einer teilweise geschnittenen Darstellung,
- Fig. 6: eine Magneteinheit einer weiteren erfindungsgemäßen Inspektionsvorrichtung,
- Fig. 7: eine Ansicht einer Magneteinheit eines weiteren erfindungsgemäßen Gegenstands in einer Schnitt- und einer perspektivischen Darstellung,
- Fig. 8: Magnetfeldlinien in einer Magneteinheit einer erfindungsgemäßen Inspektionsvorrichtung sowie einem zu inspizierenden Gegenstand,

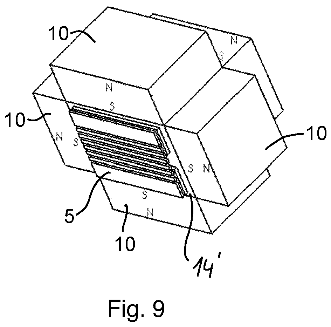

- Fig. 9: eine Magneteinheit eines weiteren erfindungsgemäßen Gegenstands.

Einzelne technische Merkmale der nachbeschriebenen Ausführungsbeispiele können auch in Kombination mit vorbeschriebenen Ausführungsbeispielen sowie den Merkmalen des unabhängigen Anspruchs und gegebenenfalls weiterer Ansprüche zu erfindungsgemäßen Gegenständen kombiniert werden. Sofern sinnvoll, werden funktional gleichwirkende Elemente mit identischen Bezugsziffern versehen.

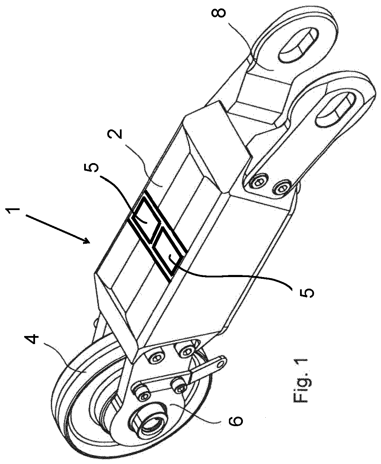

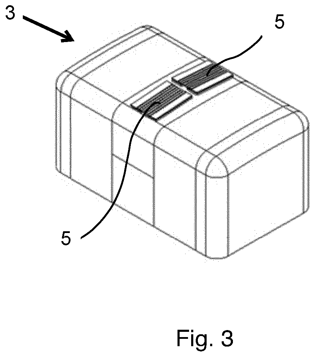

Perspektivisch ist in Fig. 1 ein Teil eines eine Magneteinheit 3 aufweisenden Abstandshalters 1 einer erfindungsgemäßen Inspektionsvorrichtung darstellt. Der Abstandshalter 1 umfasst eine Einhausung 2, in der die in der Fig. 3 erkennbare Magneteinheit 3 eingehaust ist. Die Einhausung 2 ist mit zur Oberfläche des zu inspizierenden Gegenstands gerichteten Seite in der Fig. 1 nach oben dargestellt abgebildet. Über ein Rad 4, welches in einer Gabel 6 drehbar gelagert ist, wird ein Abstand zum Gegenstand eingestellt. Zwei jeweils als Sende- und Empfangswandler ausgebildete Sensoren 5 dienen der Erzeugung und der Aufnahme von Messsignalen. An dem entgegengesetzten Ende des Abstandshalters 1 ist eine weitere Gabel 8 dargestellt, die an einem Tragrahmen einer erfindungsgemäßen Inspektionsvorrichtung gelagert und/oder gegebenenfalls mit einem weiteren Rad versehen werden kann.

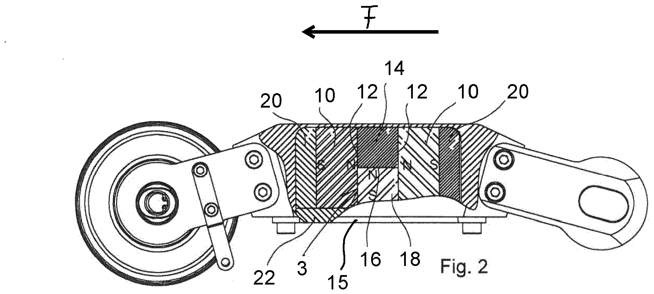

Die Magneteinheit 3 weist zwei Magnete 10 auf, deren Magnetisierungsrichtungen (Richtung Nord-Süd) parallel oder zumindest in etwa parallel zur Längsrichtung F, die der Hauptbewegungsrichtung der Inspektionsvorrichtung im Betriebsfall entspricht, verlaufen und deren Nordpolseiten 12 zueinander hin gewandt sind (Fig. 2). Bezogen auf die Magneteinheit 3 befindet sich in der Fig. 2 der Richtungspfeil auf der Seite des im Betriebsfalls zu inspizierenden Oberfläche.

Gleichzeitig liegen beide Nordpolseiten 12 an einem Fokussierelement 14 an. Auf seiner zum Richtungspfeil F befindlichen Seite liegt ein weiterer Magnet 18 mit seiner Nordpolseite 16 an diesem Fokussierelement an (vgl. Fig. 3). Dieser Magnet 18 weist eine Magnetisierungsrichtung auf, die um 90 ° gekippt bzw. angewinkelt zur Magnetisierungsrichtung der Magnete 10 ist.

In Längsrichtung der Magneteinheit, die parallel zum Pfeil F verläuft, weist die Magneteinheit Einfassungen 20 auf, die aus einem magnetisierbaren Material, vorzugsweise ein Stahl umfassend Kobalt und Eisen, aufgebaut sind, wobei die Einfassungen 20 die Magnete der Magneteinheit 3 dergestalt begrenzen, dass sie an diese in Längsrichtung vorne und hinten angrenzen.

Auch das Fokussierelement 14 ist aus einem Stahl umfassend Kobalt und Eisen. Durch die Anordnung nach außen von einer Unterseite 15 weg und in Richtung zur Oberfläche des zu inspizierenden Gegenstands erreicht das Fokussierelement 14 Flussdichten von vorzugsweise 2 bis 3 Tesla. Der Magnetfluss wird durch den Magneten 18 dergestalt durch das als Stahlelement ausgebildete Fokussierelement 14 gepresst, dass sich eine Fokussierung der Magnetfeldlinien zum Gegenstand hin ergibt. Während Standard-Halbach-Arrays durch die Sättigungsflussdichte in ihrer maximalen Einbringung des Magnetfeldes begrenzt sind, wird durch die erfindungsgemäße Ausbildung der Inspektionsvorrichtung die Anziehungskraft bis zu einem Faktor von zumindest 3 wie vorbeschrieben vergrößert. Gewicht und Kosten können daher entsprechend gering gehalten werden. Die Segmente der Magneteinheiten werden bei den Ausführungsbeispielen der Figuren von jeweils einem Magnet ausgebildet, der dann auch die Magnetisierungsrichtung des jeweiligen Segments vorgibt.

Auf der einer Seite der Magneteinheit 3 ist eine Inneneinfassung 22 vorhanden, die das ohnehin bereits nahezu vernachlässigbare Magnetfeld der Magneteinheit 3 in diese Richtung zusätzlich abschirmt.

Die Magneteinheit nach Fig. 1 ist ergänzend in Fig. 3 dargestellt. Eine solche Magneteinheit bildet mit den Sensoren 5 einen Teil einer Funktionseinheit zum Aufnehmen von Gegenstandsinformationen in Form von Sensordaten.

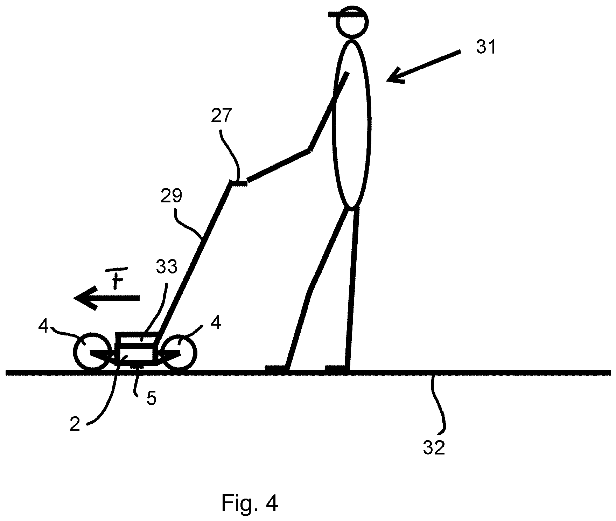

Eine erfindungsgemäße Inspektionsvorrichtung gemäß Fig. 4 ist mit einem Handgriff 27 versehen, der das obere Ende einer eine Führungsstange 29 aufweisenden Führungsvorrichtung darstellt, durch die die Inspektionsvorrichtung von einer Bedienperson 31 in Richtung F entlang einer Oberfläche eines zu inspizierenden Gegenstands 32 in Form eines Metallblechs zu bewegen ist. Beispielsweise handelt es sich um eine untere Begrenzung bzw. Wand eines Ölspeichers.

Die Funktionseinheit der Inspektionsvorrichtung umfasst weiterhin die Sensoren 5 und in dem weiteren Gehäuse 33 Mittel zu Signalerzeugung und -auswertung. Bei den Sensoren 5 handelt es sich insbesondere um EMAT-WT-Sensoren, d.h. Sensoren zur elektromagnetisch-akustischen Messung der Wandstärken des Gegenstands 32.

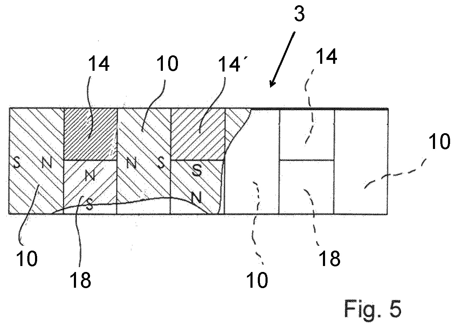

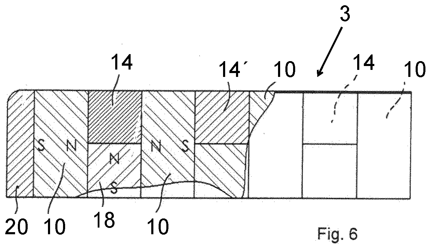

Eine Magneteinheit 3 einer weiteren erfindungsgemäßen Inspektionsvorrichtung mit einer größeren Anzahl als drei Magneten ist in der Fig. 5 dargestellt. Fokussierelemente 14 sind vorliegend jeweils an den Nordpolseiten der anliegenden Magnete 10 bzw. 18 angeordnet. Ein weiteres Fokussierelement 14' ist entsprechend von Südpolseiten der anliegenden Magnete begrenzt. Ergänzend dazu kann eine Magneteinheit wie bereits beschrieben die in Fig. 6 dargestellte Einfassung 20 aufweisen.

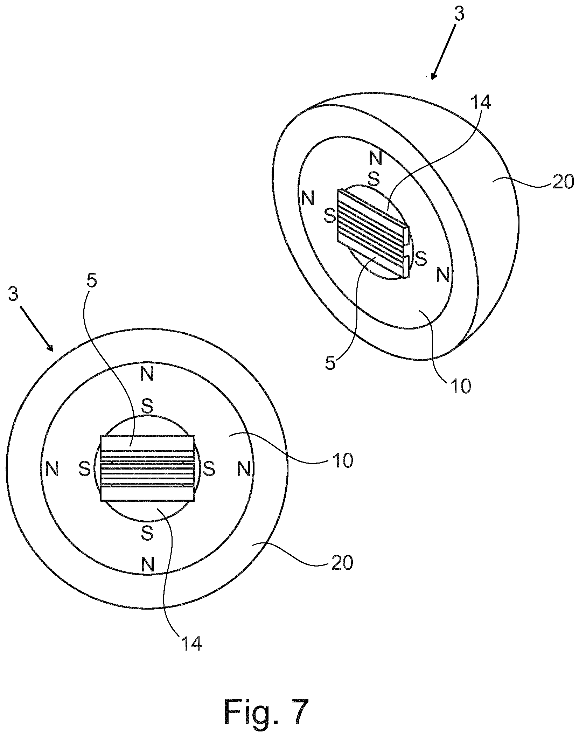

Fig. 7 offenbart in den dortigen beiden Abbildungen eine alternative Ausbildung einer Magneteinheit 3. Die in der Fig. 7 oben rechts befindliche Abbildung zeigt eine perspektivische Darstellung, während in Fig. 7 unten links ein dazu passender Querschnitt dargestellt ist. Ein halbkugelförmiges Fokussierelement 14 wird begrenzt von einem im Querschnitt kreisringförmigen, ein- oder mehrteiligen Magneten 10, welcher wiederum innerhalb einer Einfassung 20 angeordnet ist. Die halbkugelschalige Einfassung 20 aus Stahl dient als magnetischer Rückschluss.

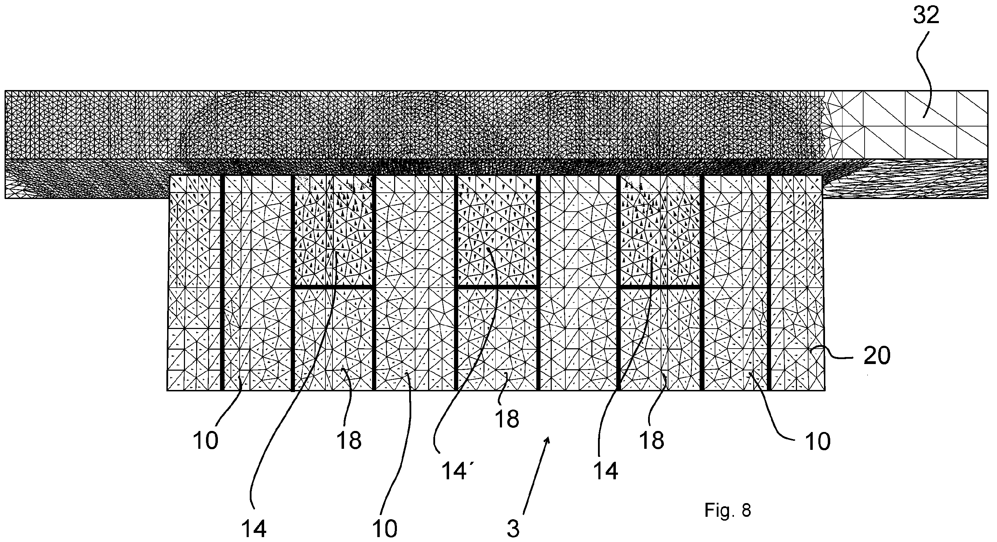

Die in einer Magneteinheit 3 und dem im Betriebsfall dicht neben dieser angeordneten Gegenstand 32 entstehenden Magnetfeldlinien sind in der Fig. 8 durch schwarze, spitzwinklige Dreiecke symbolisiert. Ein Sensor 5 ist vorliegend vorhanden, jedoch nicht dargestellt. Die Dreiecke befinden sich in der Fig. 8 in den Zellen eines aufgrund der rechnerischen Simulation der Magnetfeldlinien entstandenen Dreiecksgitters sowohl der Magneteinheit 3 als auch der Wand des Gegenstands 32. Je stärker die Gradienten der Magnetfeldlinien in Bezug auf Richtung und/oder Amplitude sind, desto feiner ist die Auflösung und je kleiner sind die Zellen des Gitters. Die in den Fokussierelementen 14, 14' vorhandenen magnetischen Flussdichten sind besonders groß, symbolisiert durch entsprechend große Dreiecke.

Eine Magneteinheit, die für die Verwendung einer als autarkes Hand-Inspektionsgerät ausgebildeten Inspektionsvorrichtung besonders gut geeignet ist, weist zusätzlich Magnete an den Seiten auf, die in vorbeschriebener Weise das Magnetfeld weiterhin auf das Fokussierelement 14 fokussieren und verstärken.

## Patentansprüche

1. Inspektionsvorrichtung zur Inspektion von sich flächig erstreckenden, metallischen Gegenständen (32), insbesondere Blechen oder Wänden, wobei die Inspektionsvorrichtung durch Verzicht auf zumindest ein einen inneren Rohrleitungsquerschnitt zumindest im Wesentlichen ausfüllendes Vortriebselement rohrleitungsungängig ausgebildet ist, umfassend zumindest eine Funktionseinheit zum Aufnehmen von Gegenstandsinformationen sowie umfassend zumindest eine zur Magnetisierung des Gegenstands vorgesehene Magneteinheit (3) mit einer Mehrzahl von Magneten (10,18), **dadurch gekennzeichnet, dass** die Magneteinheit (3) mehrere Segmente mit jeweils zumindest einem Magneten (10,18) aufweist und die Magnetisierungsrichtungen aneinander angrenzender Segmente in etwa um 90° gegeneinander angewinkelt sind.

2. Inspektionsvorrichtung nach Anspruch 1, **dadurch gekennzeichnet, dass** die Magneteinheit (3) als Permanentmagnete ausgebildete Magnete (10,18) aufweist, wobei die zueinander hin gerichteten Pole (N,S) zweier durch ein weiteres Segment getrennter Segmente eine identische Polarität aufweisen.

3. Inspektionsvorrichtung nach Anspruch 2, **dadurch gekennzeichnet, dass** das zwischen den beiden Segmenten angeordnete Segment als Vertikalsegment im Betriebsfall eine in Richtung einer Oberfläche des zu inspizierenden Gegenstands (32) gerichtete und vorzugsweise zumindest in etwa senkrecht hierzu ausgebildete Magnetisierungsrichtung aufweist.

4. Inspektionsvorrichtung nach Anspruch 3, **dadurch gekennzeichnet, dass** das Vertikalsegment zur Oberfläche des zu inspizierenden Gegenstands hin von einem Fokussierelement (14) begrenzt ist.

5. Inspektionsvorrichtung nach Anspruch 4, **dadurch gekennzeichnet, dass** das Fokussierelement (14) auf zumindest drei Seiten von einem Magneten (10,18) begrenzt ist, wobei die auf diesen Seiten befindlichen Pole der Magneten (10,18) identische Polarität aufweisen.

6. Inspektionsvorrichtung nach einem der vorherigen Ansprüche, **dadurch gekennzeichnet, dass** die Magneteinheit (3) in eine Längsrichtung parallel zur Oberfläche des zu inspizierenden Gegenstands wenigstens eine aus einem magnetisierbaren Material zumindest mit ausgebildete Einfassung (20) aufweist, die die Magnete (10,18) der Magneteinheit begrenzt.

7. Inspektionsvorrichtung nach einem der vorherigen Ansprüche, **dadurch gekennzeichnet, dass** die Magneteinheit (3) einen Sensor (5) zur Aufnahme von Inspektionsdaten aufweist.

8. Inspektionsvorrichtung nach einem der vorherigen Ansprüche unter Einschluss von Anspruch 4, **dadurch gekennzeichnet, dass** der Sensor (5) in dem Fokussierelement (14), in einer Ausnehmung desselben und/oder an dem Fokussierelement (14) angeordnet ist.

9. Inspektionsvorrichtung nach einem der vorherigen Ansprüche, **dadurch gekennzeichnet, dass** die Magneteinheit (3) in deren Längsrichtung zumindest drei hintereinander angeordnete Magnete (10,18) besitzt.

10. Inspektionsvorrichtung nach einem der vorherigen Ansprüche, **dadurch gekennzeichnet, dass** mehrere Magneteinheiten (3) insbesondere zur Abdeckung einer gekrümmten Kontur des Gegenstands nebeneinander angeordnet sind.

11. Inspektionsvorrichtung nach einem der vorherigen Ansprüche, **gekennzeichnet durch** wenigstens einen insbesondere einstellbaren Abstandshalter (1), über den Magneteinheit (3) von der Oberfläche des Gegenstands (32) beabstandet positionierbar ist.

## Claims

1. An inspection device for inspecting metallic objects (32) extending in planar fashion, in particular sheets or walls, the inspection device being embodied as pipeline-impassable in particular by virtue of dispensing with at least one propulsion element that at least substantially fills an inner pipeline cross section, comprising at least one functional unit for recording object information and also comprising at least one magnet unit (3) provided for magnetizing the object and having a plurality of magnets (10, 18), **wherein** the magnet unit (3) has a plurality of segments each having at least one magnet (10, 18) and the magnetization directions of segments adjoining one another are angled approximately by 90°, relative to one another.

2. The inspection device as claimed in claim 1, wherein the magnet unit (3) has magnets (10, 18) embodied as permanent magnets, the poles (N, S) directed towards one another of two segments separated by a further segment having an identical polarity.

3. The inspection device as claimed in claim 2, wherein the segment arranged between the two segments as a vertical segment has, during operation, a magnetization direction which is directed in the direction of a surface of the object (32) to be inspected and which is preferably formed at least approximately perpendicularly thereto.

4. The inspection device as claimed in claim 3, wherein the vertical segment is bounded by a focusing element (14) towards the surface of the object to be inspected.

5. The inspection device as claimed in claim 4, wherein the focusing element (14) is bounded by a magnet (10, 18) on at least three sides, the poles of the magnets (10, 18) that are situated on these sides having an identical polarity.

6. The inspection device as claimed in any of the preceding claims, wherein the magnet unit (3) in a longitudinal direction parallel to the surface of the object to be inspected, has at least one surround (20) which is at least concomitantly formed from a magnetizable material and which bounds the magnets (10, 18) of the magnet unit.

7. The inspection device as claimed in any of the preceding claims, wherein the magnet unit (3) has a sensor (5) for recording inspection data.

8. The inspection device as claimed in any of the preceding claims including claim 4, wherein the sensor (5) is arranged in the focusing element (14), in a recess thereof and/or on the focusing element (14).

9. The inspection device as claimed in any of the preceding claims, wherein the magnet unit (3), in the longitudinal direction thereof, has at least three magnets (10, 18) arranged one behind another.

10. The inspection device as claimed in any of the preceding claims, wherein a plurality of magnet units (3) are arranged next to one another in particular in order to cover a curved contour of the object.

11. The inspection device as claimed in any of the preceding claims, **characterized by** at least one in particular adjustable spacer (1) which allows the magnet unit (3) to be positionable at a distance from the surface of the object (32).

## Revendications

1. Dispositif d'inspection pour inspecter des objets métalliques (32) s'étendant à plat, en particulier des tôles ou des parois, le dispositif d'inspection étant conçu de manière à ne pas présenter de tuyauterie en renonçant à au moins un élément de propulsion remplissant au moins pour l'essentiel une section transversale interne de tuyauterie, comprenant au moins une unité fonctionnelle pour enregistrer des informations sur l'objet, ainsi qu'au moins une unité magnétique (3) prévue pour magnétiser l'objet et présentant une pluralité d'aimants (10, 18), **caractérisé en ce que** l'unité magnétique (3) présente plusieurs segments avec chacun au moins un aimant (10, 18) et **en ce que** les directions d'aimantation de segments adjacents sont inclinées l'une par rapport à l'autre d'environ 90°.

2. Dispositif d'inspection selon la revendication 1, **caractérisé en ce que** l'unité magnétique (3) présente des aimants (10, 18) conçus sous la forme d'aimants permanents, les pôles (N, S) dirigés l'un vers l'autre de deux segments séparés par un autre segment ayant une polarité identique.

3. Dispositif d'inspection selon la revendication 2, **caractérisé en ce que** le segment agencé entre les deux segments présente, en tant que segment vertical, en fonctionnement, une direction d'aimantation orientée en direction d'une surface de l'objet à inspecter (32) et de préférence au moins approximativement perpendiculaire à celle-ci.

4. Dispositif d'inspection selon la revendication 3, **caractérisé en ce que** le segment vertical est délimité par un élément de focalisation (14) en direction de la surface de l'objet à inspecter.

5. Dispositif d'inspection selon la revendication 4, **caractérisé en ce que** l'élément de focalisation (14) est délimité sur au moins trois côtés par un aimant (10, 18), les pôles des aimants (10, 18) situés sur ces côtés ayant une polarité identique.

6. Dispositif d'inspection selon l'une des revendications précédentes, **caractérisé en ce que** l'unité magnétique (3) présente, dans une direction longitudinale parallèle à la surface de l'objet à inspecter, au moins une enceinte (20) formée au moins d'un matériau magnétisable, qui délimite les aimants (10, 18) de l'unité magnétique.

7. Dispositif d'inspection selon l'une des revendications précédentes, **caractérisé en ce que** l'unité magnétique (3) présente un capteur (5) pour enregistrer des données d'inspection.

8. Dispositif d'inspection selon l'une des revendications précédentes, y compris la revendication 4, **caractérisé en ce que** le capteur (5) est agencé dans l'élément de focalisation (14), dans un évidement de celui-ci et/ou sur l'élément de focalisation (14).

9. Dispositif d'inspection selon l'une des revendications précédentes, **caractérisé en ce que** l'unité magnétique (3) présente au moins trois aimants (10, 18) agencés les uns derrière les autres dans la direction longitudinale.

10. Dispositif d'inspection selon l'une des revendications précédentes, **caractérisé en ce que** plusieurs unités magnétiques (3) sont disposées les unes à côté des autres, en particulier pour couvrir un contour courbe de l'objet.

11. Dispositif d'inspection selon l'une des revendications précédentes, **caractérisé par** au moins une entretoise (1) en particulier réglable, par l'intermédiaire de laquelle l'unité magnétique (3) est apte à être positionnée à distance de la surface de l'objet (32).
